# EUROPÄISCHE PATENTSCHRIFT

(11) **EP 1 133 340 B1**
(45) Veröffentlichungstag und Bekanntmachung des Hinweises auf die Patenterteilung: **15.09.2004**
(21) Anmeldenummer: 99950707.2
(22) Anmeldetag: 12.10.1999
(51) Int. Cl.: B01D 3/32, B01D 3/22

(54) **GEGENSTROM-STRIPPROHR**
COUNTERFLOW STRIPPING TUBE
TUBE DE STRIPPAGE A CONTRE-COURANT

(30) Priorität: 13.10.1998 DE 19847115
(43) Veröffentlichungstag der Anmeldung: 19.09.2001
(73) Patentinhaber: BASF AKTIENGESELLSCHAFT, 67056 Ludwigshafen (DE)
(72) Erfinder: HÜBINGER, Wolfgang, D-67117 Limburgerhof (DE); STAUFER, Günter, D-67126 Hochdorf-Assenheim (DE); KELLER, Peter, D-69493 Hirschberg (DE)
(74) Vertreter: Kinzebach, Werner, Dr.
(86) Internationale Anmeldenummer: PCT/EP1999/007639
(87) Internationale Veröffentlichungsnummer: WO 2000/021632

(56) Entgegenhaltungen:
- WO-A-97/45184
- DE-A- 1 519 672
- US-A- 2 939 771
- US-A- 3 928 513

## Beschreibung

Die vorliegende Erfindung betrifft ein Gegenstrom-Stripprohr zum Entfernen von flüchtigen organischen Bestandteilen aus Reaktionsprodukten, insbesondere aus Polymerlösungen und Polymerdispersionen.

Bei Produktionsverfahren in der chemischen Industrie entstehen Produkte, die noch unerwünschte flüchtige organische Komponenten enthalten. So können etwa bei Polymerisationsverfahren unterschiedlichste Verunreinigungen im Reaktionsprodukt zurückbleiben, beispielsweise Restmonomere, die aus einem unvollständigen Umsatz der Edukte resultieren, oder gesättigte, nicht polymerisierbare Verbindungen, die mit den Einsatzstoffen eingeschleppt werden, oder auch niedermolekulare Produkte aus Nebenreaktionen. Diese flüchtigen organischen Bestandteile sind häufig sehr geruchsintensiv und teilweise sogar gesundheitsschädlich. Gerade Polymerdispersionen haben aber zahlreiche Anwendungsbereiche gefunden, bei denen Geruchsbelästigungen nicht auftreten dürfen. Typischerweise seien hier Innenraumanwendungen genannt, wo Polymerdispersionen beispielsweise als Fliesen- oder Teppichkleber oder in Lackharzen zum Einsatz kommen. Geruchsfreie Polymerdispersionen werden beispielsweise auch von der Papierindustrie in Form von Papierstreichdispersionen oder in Form von Haftklebstoffdispersionen benötigt. Schließlich werden auch in der Kosmetikindustrie, etwa bei der Herstellung von Haargelen oder in der Textilindustrie, etwa als Vliesstoffbeschichtungsmittel, Polymerdispersionen eingesetzt, die möglichst keinen Eigengeruch aufweisen dürfen. Daher müssen restflüchtige Bestandteile in Polymerisaten bei vielen Anwendungen, insbesondere aber bei Innenraumanwendungen und im Lebensmittel- oder Kosmetikbereich, möglichst vollständig entfernt werden.

Zum Entfernen der flüchtigen organischen Bestandteile aus Reaktionsprodukten, beispielsweise aus Polymerlösungen oder aus durch radikalische Polymerisation vinylischer Monomere hergestellter wässriger Polymerdispersionen und -suspensionen, sind sog. Desodorierverfahren entwickelt worden. Neben chemischen Verfahren, die jedoch meist nur die ungesättigten Verbindungen beeinflussen, werden überwiegend sog. Strippverfahren eingesetzt, bei denen ein Strippgas durch die Suspension oder Dispersion geleitet wird. Als Strippgase kommen Luft, Sauerstoff, Stickstoff, überkritisches Kohlendioxid, Ozon oder Wasserdampf zum Einsatz. Es sind auch Verfahren bekannt, bei denen einer chemischen Desodorierung eine physikalische Desodorierung mit Hilfe eines Strippverfahrens nachgeschaltet ist.

Beispielsweise ist in DE-C-12 48 943 eine Vorrichtung zum diskontinuierlichen Entfernen von Geruchsstoffen aus wässrigen Polymerisatdispersionen beschrieben worden. Dabei wird die Dispersion in einem Kessel vorgelegt und die unerwünschten Komponenten durch Einleiten von Wasserdampf am Kesselboden ausgetrieben.

Für größere Mengen an zu behandelnden Dispersionen werden zunehmend kontinuierliche Kolonnenverfahren eingesetzt.

In der Internationalen Patentanmeldung WO 97/45184 der Anmelderin ist beispielsweise eine Kolonne und ein Verfahren zur Desodorierung von Dispersionen beschrieben. Dabei wird die Dispersion mit Wasserdampf in einer Regensiebböden (sog. Dual-Flow-Böden) und/oder Querstromsiebböden enthaltenden Gegenstromkolonne behandelt, wobei man den Wasserdampf bei einem Druck von 0,1 - 0,7 bar in die Kolonne im Gegenstrom zur Dispersion einleitet. Mit der in WO 97/45184 beschriebenen Gegenstromkolonne können die Siebböden der Kolonne vereinfacht und der spezifische Durchsatz erhöht werden. Die bekannten Gegenstromkolonnen sind aus einem Stück gefertigt, wobei die Siebböden nachträglich auf eingeschweißten Tragringen aufgeschraubt werden.

Eine derartige Konstruktion ist jedoch mit Nachteilen behaftet. Da Dispersionen leicht verfilmen und Koagulat bilden, ist eine häufige Reinigung der Siebböden erforderlich. Da die Siebböden fest in der Kolonne verschraubt sind und ein Ausbau der einzelnen Siebböden extrem zeitaufwendig ist, muss die Strippkolonne an jedem Siebboden mit einem Mannloch und mindestens einer Reinigungsöffnung versehen werden. Durch ein solches Mannloch kann ein Arbeiter den zugehörigen Siebboden und die angrenzenden Wandbereiche bis zum nächsten Siebboden mit einem Hochdruckwasserstrahl reinigen. Dabei muss mit Wasserdrücken von bis zu 2000 bar gearbeitet werden, was eine erhebliche Gefährdung des auf sehr beengtem Raum arbeitenden Reinigungspersonals mit sich bringt. Die Anbringung eines Mannlochs bedingt außerdem einen Siebbodenabstand von mindestens 600 mm und einen Kolonnendurchmesser von etwa 1 m. Für eine gute Trennwirkung führt dies zu Kolonnenhöhen von über 20 m und einem Innenvolumen von mindestens 25 m³. Bei typischerweise 25 bis 30 Siebböden entstehen so komplexe Kolonnen mit insgesamt über 100 Stutzen, Mannlöchern und Reinigungsdeckeln. Diese Stutzen und Deckel sind potentielle Schmutzfänger. Auch die Reinigung der Siebböden im eingebauten Zustand erweist sich als kompliziert und arbeitsintensiv. Ein Wechsel der Siebbodengeometrie (Regensiebböden oder Querstromsiebböden bzw. Siebböden mit unterschiedlicher Lochung für unterschiedliche Durchsätze) führt zu einem Betriebsausfall der Kolonne von mehreren Wochen.

Für die Desodorierung kleinerer Produktchargen besteht außerdem der Nachteil, dass vergleichsweise geringe Dispersionsmengen durch einen relativ großen und aufwendigen Apparat gepumpt werden müssen.

US-A-1 749 266 beschreibt eine Fraktionierkolonne, die aus mehreren miteinander verbundenen Rohrschüssen besteht und Siebbodenpakete aufweist. Aus diesem Dokument geht aber weder hervor, dass die Rohrschüsse über lösbare Flanschverbindungen miteinander verbunden sind, noch, dass die Pakete herausnehmbare Einsätze bilden. Gegenstromkolonnen mit Siebbodenpaketen, die herausnehmbare Einsätze bilden, sind aus US-A-4 055 610 oder US-A-3 997 633 bekannt.Ferner wird in US-A-2 939 771 eine Gegenstromkolonne beschrieben, die aus zwei lösbar verbundenen Einzelschüssen zusammengesetzt ist.

Aufgabe der vorliegenden Erfindung ist es, die bekannten Gegenstromkolonnen, insbesondere die aus WO 97/45184 bekannte Gegenstromkolonne speziell zum Entfernen von füchtigen organischen Bestandteilen aus polymeren Reaktionsprodukten zu optimieren und bei gleichbleibend hohem spezifischem Durchsatz konstruktiv zu vereinfachen, so dass insbesondere eine einfachere Reinigung und Auswechselbarkeit der Siebböden gewährleistet ist. Außerdem soll die erfindungsgemäße Vorrichtung auch für die Desodorierung kleinerer Produktchargen geeignet sein.

Gelöst wird diese Aufgabe durch das Gegenstrom-Stripprohr mit den Merkmalen des vorliegenden Anspruchs 4. Vorteilhafte Weiterbildungen der Erfindung sind Gegenstand der abhängigen Ansprüche. Gegenstand der vorliegenden Erfindung ist außerdem die Verwendung eines Gegenstrom-Stripprohrs zum Entfernen von flüchtigen organischen Bestandteilen aus polymeren Reaktionsprodukten, mit einem aus mehreren durch Flanschverbindungen mit einander verbundenen Rohrschüssen zusammengesetzten Kolonnenrohr, in welchem Siebböden angeordnet sind, Anschlüssen zum Zu- und Abführen der Reaktionsprodukte und Anschlüssen zum Zu- und Abführen wenigstens eines Strippmittels im Gegenstrom zu den Reaktionsprodukten, wobei jeweils mehrere aufeinanderfolgende Siebböden miteinander verbunden sind und wenigstens zwei jeweils als Einheit aus dem Kolonnenrohr herausnehmbare Einsätze bilden.

In der deutschen Offenlegungsschrift DE 1 519 672 und in der schweizerischen Patentschrift CH 562 046 sind Fraktionierkolonnen beschrieben, die zu herausnehmbaren Einsätzen verbundene Siebböden aufweisen. Eine Verwendung von derartigen Siebbodeneinsätzen in Gegenstrom-Stripprohren ist aus diesen Dokumenten aber nicht bekannt. Außerdem wird in diesem Stand der Technik eine Verbindung aller Siebböden zu einem einzigen Einsatz vorgeschlagen. Der erfindungsgemäß vorgesehene modulare Aufbau mit mehreren Einsätzen ist im Stand der Technik nicht beschrieben.

Mit dem erfindungsgemäßen Gegenstrom-Stripprohr sind zahlreiche Vorteile verbunden:

Die Siebböden des Stripprohrs können ohne längeren Stillstand der Anlage aus dem Rohr entnommen oder ausgetauscht werden. Während bei herkömmlichen Strippkolonnen die einzelnen Siebböden zunächst von den jeweiligen Tragringen abgeschraubt werden müssen, können beim erfindungsgemäßen Stripprohr die kompletten Einsätze nacheinander aus dem Rohr gehoben werden. Es ist daher möglich, die Einsätze außerhalb des Rohres zu reinigen, was einen Sicherheitsvorteil für das Reinigungspersonal bedeutet. Es können auch unmittelbar nach Entfernen der verschmutzten Einsätze als Ersatz bereitgehaltene Einsätze eingebaut werden. Dieser Bodenwechsel erfordert nur wenige Tage Stillstand der Anlage, während ein Wechsel der fest eingebauten Siebböden bei einer vergleichbaren herkömmlichen Gegenstromkolonnen wenigstens zwei Wochen Betriebsausfall zur Folge hat.

Damit entfällt beim erfindungsgemäßen Stripprohr aber auch die Notwendigkeit, für jeden Siebboden ein separates Mannloch und zugehörige Reinigungsstutzen vorzusehen. Das erfindungsgemäße Stripprohr zeichnet sich daher gegenüber den bekannten Gegenstromkolonnen durch eine - trotz vergleichbarer Bodenzahl - drastische Verringerung der Zahl der Anschlussstutzen aus. Es sind je nach Ausführungsform nur noch ca. 20 bis 30 Stutzen vorhanden, bei denen es sich hauptsächlich um Anschlüsse für Temperaturoder Drucküberwachungseinrichtungen, um Sichtfenster oder um Anschlüsse zur Probennahme handelt.

Dieser einfachere konstruktive Aufbau erleichtert auch die Reinigung des Stripprohrs, da mit der Verringerung der Stutzenzahl viele der bei herkömmlichen Kolonnen an der Kolonneninnenseite vorhandene, schlecht zugängliche und schwer zu reinigenden Bereiche wegfallen.

Der von der Erfindung vorgeschlagene vereinfachte Aufbau soll auch durch die hier verwendete Terminologie verdeutlicht werden: Das erfindungsgemäße Gegenstrom-Stripprohr hat aufgrund der wenigen äußerlich sichtbaren Stutzen tatsächlich den Charakter eines einfachen "Rohrs", während die bekannten Strippkolonnen mit ihren zahlreichen Stutzen, Deckeln und Anschlüssen den typischen Anblick einer Siebboden-"Kolonne" bieten.

Erfindungsgemäß können die Siebböden auf unterschiedlichste Weise zu Einsätzen verbunden werden. Es ist beispielsweise möglich, die Siebböden mit Hilfe von Gewindestangen miteinander zu verschrauben. Bevorzugt werden die Siebböden aber mit Hilfe von Verbindungsblechen verschweißt, was besonders stabile Einsätze ergibt.

Die Einsätze können an ihrem Außenumfang Führungsmittel, beispielsweise Laufrollen oder Gleitelemente, aufweisen, so dass sie ohne Beschädigungsgefahr aus dem Stripprohr gehoben werden können.

Die Einsätze können im Stripprohr fixiert werden. Besonders bevorzugt werden sie aber einfach aufeinandergestellt oder an geeignete Halterungen im Rohr aufgelegt oder eingehängt.

Vorzugsweise sind in dem Kolonnenrohr 2 bis 10 dieser Einsätze angeordnet, wobei jeder Einsatz dann bevorzugt 3 bis 10, vorzugsweise 4 bis 7 Siebböden aufweist. Besonders bevorzugt sind dabei 6 Siebböden pro Einsatz. Bei weniger Siebböden pro Einsatz werden zuviele Einsätze benötigt, was die Bodenentnahme wieder aufwendiger gestaltet. Mehr Siebböden pro Einsatz machen die einzelnen Einsätze schwerer und komplizierter handhabbar.

Der Durchmesser der Siebböden eines Einsatzes entspricht vorteilhaft im wesentlichen dem Innendurchmesser des Kolonnenrohrs und beträgt bevorzugt 100 bis 2500 mm, besonders bevorzugt 500 bis 1600 mm. Das notwendigerweise zwischen Außenumfang eines Siebbodens und der Innenwand des Rohrs existierende Spiel kann durch elastische Dichtlippen, die am Außenumfang des Siebbodens umlaufen, ausgeglichen werden.

Der Abstand aufeinanderfolgender Siebböden in einem Einsatz kann beispielsweise zwischen 200 bis 1.000 mm, vorzugsweise zwischen 400 bis 600 mm betragen. Typischerweise hat ein Einsatz dann eine Höhe zwischen 2 und 3 Metern.

Der gegebenenfalls erweiterte Kopf der Kolonne kann, bei kleineren Ausführungsformen der erfindungsgemäßen Vorrichtung, abnehmbar ausgebildet sein. Er kann aber auch eine durch einen abnehmbaren Deckel verschließbare Öffnung aufweisen, deren Durchmesser groß genug ist, damit die Einsätze mit Hilfe eines Hebewerkzeugs durch die Öffnung entnommen werden können.

Erfindungsgemäß ist das Kolonnenrohr aus mehreren Rohrschüssen zusammengesetzt. Jedem Rohrschuss ist bevorzugt ein Einsatz zugeordnet, d.h. die Länge des Rohrschusses und die Höhe des Einsatzes sind aufeinander abgestimmt.

Die Innendurchmesser aufeinanderfolgender Rohrschüsse nehmen von oben nach unten ab, wobei der Innendurchmesser eines Rohrschusses auf seiner Länge im Wesentlichen konstant bleibt. In jedem Rohrschuss ist dann ein durch die obere Öffnung des Kolonnenrohrs herausnehmbarer Einsatz angeordnet, dessen Siebböden einen dem entsprechenden Rohrschuss angepassten Durchmesser besitzen. Durch das sich nach oben erweiternde Stripprohr können die einzelnen Einsätze ohne Gefahr eines Verkantens entnommen werden.

Dabei liegen die Einsätze vorzugsweise auf stufenartigen verbindungsbereichen zwischen jeweils zwei aufeinanderfolgenden Rohrschüssen, etwa auf einem verbreiterten Flanschteil, auf. Alternativ können die Einsätze im Kolonnenrohr aufeinander stehen. Diese Variante wird insbesondere bei kleineren Kolonnen bevorzugt.

Der Kolonnenkopf kann als Schwerkraftabscheider für Schaum und mitgerissene Flüssigkeitströpfchen ausgebildet sein. Der Innendurchmesser des Kopfes ist dann größer als der des Kolonnenrohrs. Die Kolonne kann im unteren Bereich eine Verlängerung um etwa 1 bis 4 Meter aufweisen, die den Kolonnensumpf darstellt. In diesem Kolonnensumpf werden die desodorierten Reaktionsprodukte aufgenommen. Üblicherweise dient der Kolonnensumpf als Vorlage für nachfolgende Verfahrensstufen.

Als Siebböden können Regensiebböden und/oder Querstromsiebböden eingesetzt werden. Derartige Siebböden und ihr Aufbau sind beispielsweise in Klaus Sattler, "Thermische Trennverfahren", VCH 1988, beschrieben. Regensiebböden sind hier besonders bevorzugt, da sie keine konstruktionsbedingten Totzonen aufweisen, was einerseits den Reinigungsaufwand reduziert und andererseits geringere Kolonnenquerschnitte erlaubt. Aufgrund des besseren Wirkungsgrades kann auch die Anzahl der Siebböden und damit die Kolonnenhöhe reduziert sein.

Als Strippmittel können bevorzugt gasförmige Stoffe wie Luft, Sauerstoff, Stickstoff, überkritisches Kohlendioxid oder Ozon verwendet werden. Besonders bevorzugt ist bei dem erfindungsgemäßen Gegenstrom-Stripprohr allerdings die Verwendung von Wasserdampf als Strippmittel. Bevorzugt wird der Wasserdampf über einen oder mehrere Anschlussstutzen in den Kolonnensumpf geleitet und am Kolonnenkopf abgezogen. Jeder dieser Anschlussstutzen weist bevorzugt ein pneumatisch betätigbares Ventil mit einer nachgeschalteten Verteilereinrichtung auf, mit welcher der Wasserdampf über zahlreiche feine Öffnungen in den Kolonnensumpf geleitet wird.

Die Einspeisung der zu desodorierenden Reaktionsprodukte erfolgt im oberen Bereich des Kolonnenrohrs, vorzugsweise im vergrößerten Kopf der Kolonne. Besonders bevorzugt werden die Reaktionsprodukte etwa auf halber Höhe des Kolonnenkopfes tangential in den Kopf eingeleitet. Durch diese Maßnahme kann man die Schaumbildung drastisch reduzieren.

Die erfindungsgemäße Vorrichtung lässt sich besonders vorteilhaft zur Herstellung von Polymerdispersionen oder -suspensionen mit niedrigem Gehalt an flüchtigen organischen Stoffen verwenden. Für eine ausführliche Beschreibung der Herstellung und Desodorierung bevorzugter mit dem erfindungsgemäßen Gegenatrom-Stripprohr behandelbarer Dispersionen sei auf die Offenbarung der Internationalen Anmeldung WO 97/45184 der Anmelderin verwiesen, auf die hier ausdrücklich Bezug genommen wird.

Das erfindungsgemäße Gegenstrom-Stripprohr ist besonders vorteilhaft auch zum Austausch eines organischen Lösungsmittels einer Polymerlösung durch Wasser geeignet.

Die vorliegende Erfindung wird im folgenden unter Bezugnahme auf in den beigefügten Zeichnungen dargestellte bevorzugte Ausführungsformen ausführlicher erläutert.

In den Zeichnungen zeigt:
- Figur 1: eine schematische Darstellung eines ersten, speziell für kleinere Produktchargen geeigneten erfindungsgemäß verwendbaren Gegenstrom-Stripprohrs;
- Figur 2: einen Ausschnitt des Stripprohrs der Figur 1 im axialen Längsschnitt mit darin eingesetzten, aufeinanderstehenden Einsätzen;
- Figur 3: eine schematische Darstellung eines für große Produktchargen geeigneten erfindungsgemäßen Stripprohrs;
- Figur 4: einen Ausschnitt des Stripprohrs der Figur 3 im axialen Längsschnitt mit einem aufliegenden Einsatz;
- Figur 5: ein Detail der Figur 4 in vergrößertem Maßstab;
- Figur 6: ein Ausschnitt eines erfindungsgemäßen Stripprohrs im axialen Längsschnitt, wobei Querstromsiebböden anstelle von Regensiebböden verwendet werden;
- Figur 7: eine Aufsicht auf einen Regensiebboden;
- Figur 8: eine Aufsicht auf einen Querstromsiebboden; und
- Figur 9: eine Strippkolonne gemäß Stand der Technik.

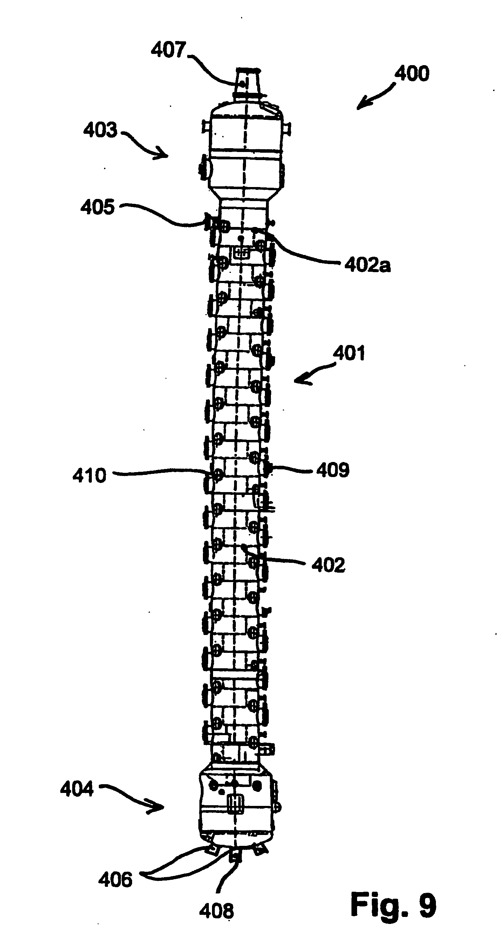

Bezugnehmend auf die Figur 9 wird zunächst der Aufbau einer herkömmlichen Strippkolonne erläutert. Die bekannte Strippkolonne 400 besteht aus einem, aus einem Stück gefertigten Kolonnenrohr 401, in welchem 30 Siebböden 402 mit einem Durchmesser von 1500 mm angeordnet sind. Die Siebböden sind auf in dem Kolonnenrohr 401 eingeschweißte (in der Zeichnung nicht sichtbare) Tragringe aufgeschraubt. Die Strippkolonne 400 weist einen erweiterten Kolonnenkopf 403 und einen ebenfalls erweiterten Kolonnensumpf 404 auf. Kopf und Sumpf haben jeweils einen Durchmesser von 2300 mm. Die Gesamthöhe der bekannten Strippkolonne beträgt 26,2 m, bei einem Volumen von 57 m³. Die Dispersion mit restflüchtigen Verunreinigungen oder eine lösungsmittelhaltige Polymerlösung wird über einen Einlaufstutzen 405 in Höhe des obersten Bodens 402a in die Kolonne geleitet. Gleichzeitig wird am Kolonnensumpf 404 über mehrere Stutzen 406 Wasserdampf eingeblasen, der im Kolonnenrohr im Gegenstrom zur Dispersion aufsteigt und die Restflüchtigen aus der Dispersion hinaustreibt. Im Fall ein Polymerlösung wird das organische Lösungsmittel aus der Lösung getrieben und durch Wasser ersetzt. Wasserdampf und Restflüchtige bzw. organisches Lösungsmittel verlassen die Kolonne 400 über einen unter leichtem Unterdruck stehenden Auslassstutzen 407 am Kolonnenkopf 403. Auf den Siebböden 402 findet eine effiziente Durchmischung der Dispersion oder der Polymerlösung mit dem aufsteigenden Wasserdampf statt. Die so gereinigte Dispersionslösung oder die Polymerlösung mit ausgetauschtem Lösungsmittel verlässt die Kolonne am Produktauslass 408 im Kolonnensumpf 404.

Da Dispersionen leicht verfilmen und Koagulat bilden, müssen die Siebböden häufig gereinigt werden. Zu diesem Zweck ist bei der bekannten Kolonne jedem Siebboden 402 ein Mannloch 409 mit einem Durchmesser von 500 mm und mindestens ein Reinigungsstutzen 410 zugeordnet, wobei der Reinigungsstutzen im vorliegenden Fall einen Durchmesser von 200 mm aufweist. Durch das Mannloch 409 kann Reinigungspersonal den zugeordneten Siebboden 402 sowie den unmittelbar darüberliegenden Wandbereich des Kolonnenrohrs 401 mit einem Hochdruckwasserstrahl säubern. Allerdings ist diese Reinigungsprozedur sehr aufwendig und aufgrund der verwendeten Wasserdrücke von 2000 bar und darüber gefährlich. Außerdem ist die Reinigung stets unvollkommen, da die zahlreichen Stutzen am Rohr, im vorliegenden Fall insgesamt 108 Stutzen, Schmutzfänger sind, die praktisch nicht gründlich gereinigt werden können.

Demgegenüber hat das im folgende erläuterte erfindungsgemäß verwendbare Stripprohr einen wesentlich einfacheren Aufbau und erlaubt eine schnelle und gründliche Reinigung.

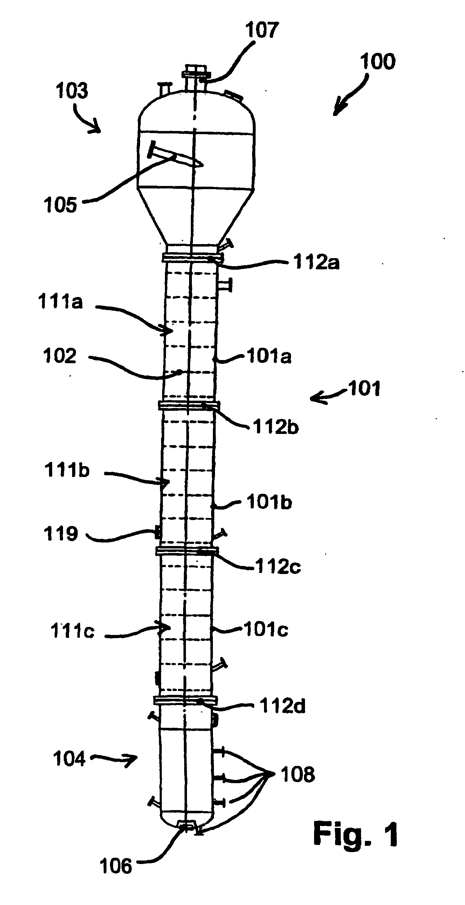

Ein erfindungsgemäß verwendbares Stripprohr ist in Figur 1 dargestellt. Das Stripprohr 100 zeigt bereits in der schematischen Darstellung der Figur 1 einen wesentlich einfacheren Aufbau als die herkömmliche Strippkolonne der Figur 9. Diese Variante dient vor allem zur Behandlung von kleineren Produktchargen. In dem Kolonnenrohr 101 sind insgesamt 18 Siebböden 102 mit einem Durchmesser von 800 mm angeordnet. Der Kolonnenkopf 103 ist auf einen Durchmesser von 1800 mm erweitert und dient als Abscheider für mitgerissene Produkttröpfchen. Im Kolonnenkopf ist auch der Produkteinlass 105 vorgesehen, der im dargestellten Beispiel etwa auf halber Höhe des Kolonnenkopfes tangential einmündet. Eine solche tangentiale Zufuhr verhindert beispielsweise bei der Einspeisung von Dispersionen eine übermäßige Schaumbildung. Die eingespeiste Dispersion oder Polymerlösung fließt in dem Kolonnenrohr 101 durch die Siebböden 102 nach unten, wobei im Gegenstrom im verlängerten Kolonnensumpf 104 über einen Einlassstutzen 106 eingespeister Wasserdampf nach oben geführt wird. Wasserdampf und mitgeführte Restflüchtige verlassen die Kolonne am Kolonnenkopf 103 über einen Auslassstutzen 107, an welchem Unterdruck anliegt. Die gestrippte Dispersion oder die vom organischen Lösungsmittel befreite Polymerlösung verlässt das Stripprohr 100 über einen oder mehrere seitlich am Kolonnensumpf vorgesehene Produktauslässe 108.

Im Gegensatz zum Stand der Technik ist das Kolonnenrohr 101 des erfindungsgemäß verwendbaren Stripprohrs aus mehreren, im Beispiel der Figur 1 insgesamt drei, Rohrschüssen 101a, 101b, 101c zusammengesetzt. Im vorliegenden Fall haben die drei Rohrschüsse den gleichen Innendurchmesser.

Jeweils sechs Siebböden 102 sind zu Einsätzen 111a, 111b und 111c zusammengefasst. Die Siebböden 102 sind, anders als bei den Strippkolonnen des Standes der Technik, nicht fest mit dem Kolonnenrohr verbunden, sondern als herausnehmbare Einsätze ausgebildet. Im dargestellten Beispiel ist jedem Rohrschuss 101a-101c genau ein Einsatz 111a bzw. 111b bzw. 111c zugeordnet. Die einzelnen Rohrschüsse sind mittels Flanschverbindungen 112a-112d untereinander bzw. mit dem Kolonnenkopf 103 und dem Kolonnensumpf 104 verbunden.

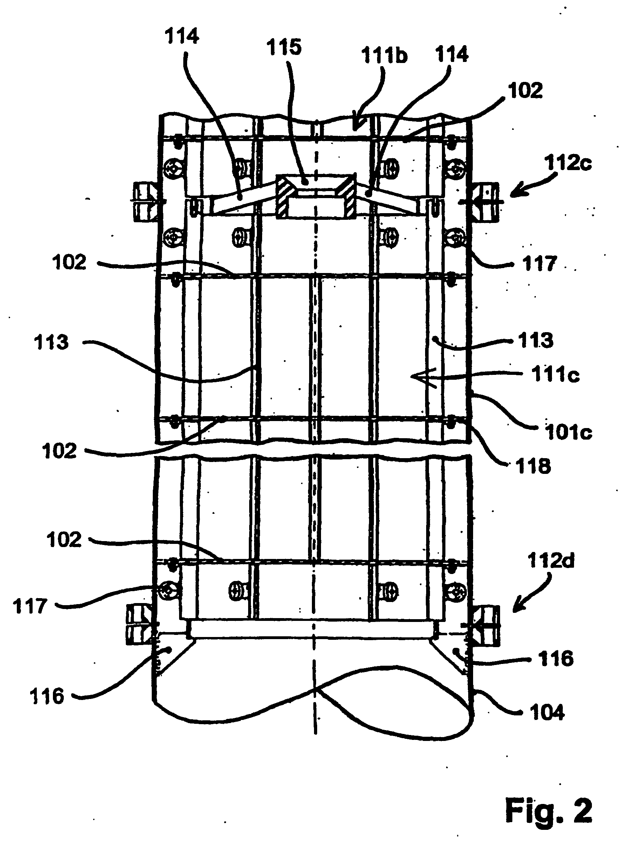

Ein möglicher Aufbau eines Einsatzes und die Anordnung der Einsätze in dem Kolonnenrohr 101 wird nun unter Bezugnahme auf Figur 2 näher erläutert, die einen vergrößerten Ausschnitt des Stripprohres der Figur 1 darstellt. In Figur 2 erkennt man den untersten Rohrschuss 101c mit dem darin angeordneten Einsatz 111c. Der Übersichtlichkeit halber ist der mittlere Bereich des Rohrschusses 101c mit den drei weiteren Siebböden des Einsatzes 111c nicht dargestellt. Die Siebböden 102 des Einsatzes 111c sind mit sechs am Außenumfang der Siebböden angeordneten länglichen Blechen 113 zu dem Einsatz zusammengeschweißt. Am oberen Ende des Einsatzes 111c sind Querstreben 114 angeordnet, die in einem Adapter 115 zusammenlaufen. Der Adapter 115 ist so ausgebildet, dass er mit einer von oben in das Kolonnenrohr 101 eingeführten, hier nicht gezeigten, automatischen Hubzange zusammenwirken kann.

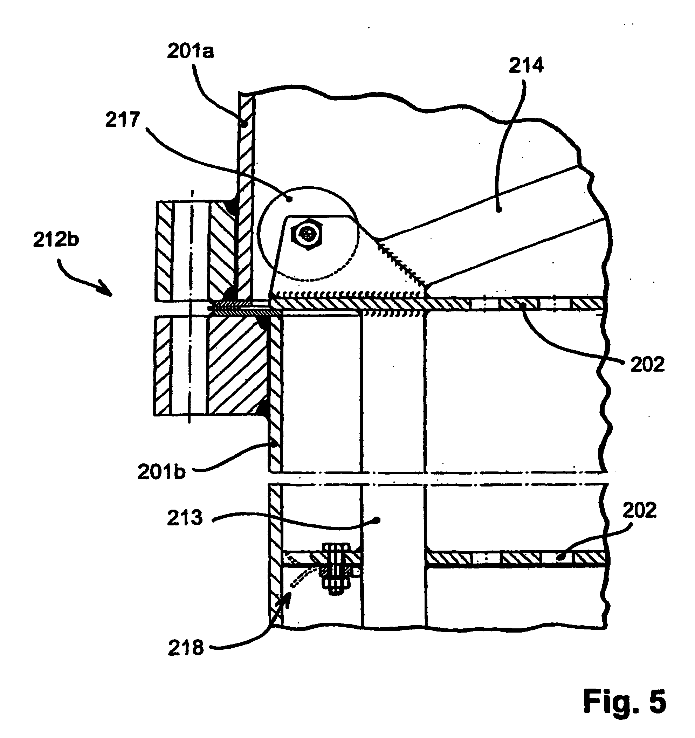

Im dargestellten Beispiel sind die einzelnen Einsätze aufeinandergestapelt. Man erkennt in Figur 2, dass der unterste Einsatz 111c auf mit der Innenseite des verlängerten Sumpfes 104 verschweißten Tragstutzen 116 aufsitzt. Die Gesamtlänge des Einsatzes entspricht im Wesentlichen der Länge des zugeordneten Rohrschusses. Auf den untersten Einsatz 111c ist der darüberliegende Einsatz 111b aufgesetzt, wobei in der dargestellten Ausführungsform an der Unterseite des Einsatzes 111b vorgesehene Stifte in entsprechende zentrierausnehmungen an der Oberseite des Einsatzes 111c eingreifen. Die Einsätze selbst sind mit dem Kolonnenrohr 101 nicht verbunden. Zum Ein- und Ausbau der Einsätze wird der Kolonnenkopf 103 abgehoben und eine automatische Bubzange greift in den Adapter 115 des obersten Einsatzes 111a ein, der wie der in Figur 2 dargestellte Einsatz 111c ausgebildet ist, hebt dann den Einsatz 111a vom darunterliegenden Einsatz 111b ab und zieht ihn nach oben aus dem Rohr heraus. In gleicher Weise werden schließlich nacheinander die Einsätze 111b und 111c aus dem Rohr gezogen. Zur besseren Führung beim Ein- und Ausbau weist jeder Einsatz an seinem Außenumfang mehrere Gleitelemente 117 aus Polytetrafluorethylen (PTFE) auf. Zwischen dem Außenumfang der Siebböden 102 und der Innenwand des Kolonnenrohres 101 besteht im Allgemeinen ein gewisses Spiel. Daher ist zur Abdichtung des so entstehenden Zwischenraumes am Außenumfang jedes Siebbodens 102 eine, in Figur 2 nur schematisch angedeutete, in der in Figur 5 dargestellten Variante aber besser erkennbare elastische Lippendichtung 118 vorgesehen.

Bei Verschmutzung der Siebböden können diese beim erfindungsgemäß verwendbaren Stripprohr einfach ausgebaut und außerhalb des Rohres gründlich und sicher gereinigt werden. Dementsprechend ist das Kolonnenrohr sehr einfach aufgebaut, da Mannlöcher für jeden Siebboden und die zahlreichen Reinigungsstutzen nicht mehr erforderlich sind. Das Kolonnenrohr weist einige Schaugläser 119, durch die Ein- und Ausbau der Einsätze und im Betrieb ein mögliches Verstopfen der Siebböden überwacht werden können, sowie einige Mess- und Probenentnahmestutzen auf. Insgesamt sind es lediglich 25 Anschlussstutzen. Damit gestaltet sich aber auch die Reinigung des Stripprohrs wesentlich einfacher als die Reinigung der Strippkolonnen des Standes der Technik. Als weiterer Vorteil des vereinfachten konstruktiven Aufbaus sind die niedrigeren Herstellungskosten für das erfindungsgemäße Stripprohr zu nennen.

Die Gesamthöhe des Stripprohrs 100 der Figur 1 beträgt bei drei Einsätzen ca. 12 m. Das Strippen erfolgt typischerweise bei Temperaturen zwischen 50 und 90 °C. Die dargestellte Ausführungsform ist auch für Varianten mit zwei oder vier Einsätzen geeignet.

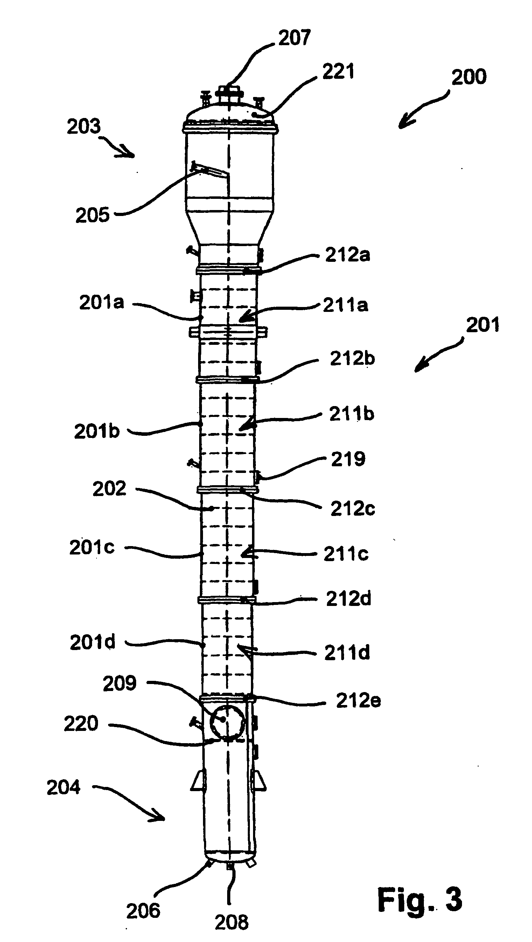

In Figur 3 ist eine Ausführungsform des erfindungsgemäßen Stripprohres dargestellt. Bauteile, die den bereits im Zusammenhang mit Figur 1 erläuterten Bauteilen entsprechen oder die die gleiche Funktion erfüllen, sind mit den entsprechenden, um 100 erhöhten Bezugsziffern bezeichnet und werden an dieser Stelle nicht mehr ausführlicher erläutert. Das Kolonnenrohr 201 des erfindungsgemäßen Stripprohres 200 ist bei der dargestellten Ausführungsform in vier aneinandergeflanschte Rohrschüsse 201a bis 201d unterteilt, wobei in jedem Rohrschuss ein aus 6 Siebböden 202 bestehender Einsatz 211a-d angeordnet ist. Die Siebböden 202 eines Einsatzes haben einen Abstand von 400 mm zueinander. Im Kolonnensumpf 204 ist ein einzelner fest verankerter Siebboden 220 angeordnet, der über ein Mannloch 209 zugänglich ist. Insgesamt weist das Stripprohr 200 somit 25 Siebböden 202 auf. Die Produktzufuhr erfolgt wieder über einen tangential in den Kolonnenkopf 203 mündenden Einlassstutzen 205. Die Produktentnahme erfolgt über einen zentralen Stutzen 208 am Boden des Kolonnensumpfes 204. Dort sind auch wieder Anschlüsse 206 für die Einleitung von Wasserdampf vorgesehen, der am Kolonnenkopf über den Stutzen 207 abgeführt wird.

Bei dieser Ausführungsform haben die einzelnen Rohrschüsse unterschiedliche von oben nach unten abnehmende Durchmesser. Im dargestellten Beispiel hat der oberste Rohrschuss 201a einen Durchmesser von 1150 mm während der unterste Rohrschuss 201d nur noch einen Durchmesser von 1000 mm besitzt. Der Durchmesser des Kolonnenkopfes 203 beträgt 1800 mm und die Gesamthöhe des Stripprohres 16,2 m. An den einzelnen Rohrschüssen sind wieder Sichtfenster 219 vorgesehen.

Bei einer nicht dargestellten Variante des Stripprohrs der Figur 3 sind vier Einsätze mit je sechs, im Abstand von 600 mm angeordneten Siebböden vorgesehen, die Durchmesser zwischen 1600 mm und 1450 mm aufweisen. Dieses größere Stripprohr hat eine Gesamthöhe von ca. 22 m.

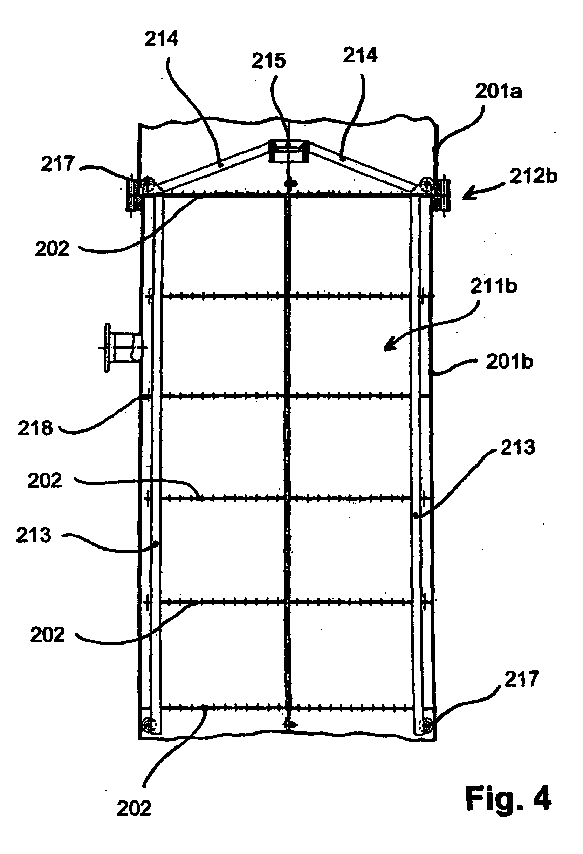

Im Gegensatz zur Variante der Figuren 1 und 2 liegen die Einsätze 211a-211e bei dieser zweiten Variante an stufenförmigen Absätzen der Flanschverbindungen 212a-e auf, wie insbesondere aus der Darstellung der Figur 4 und der Detailansicht der Figur 5 deutlich wird, wo der im Bereich des Flansches 212b gebildete Absatz erkennbar ist, auf dem der verlängerte oberste Siebboden 202 des Einsatzes 211b aufliegt. In Figur 5 ist für einen der Siebboden 202 auch die elastische Lippendichtung 218 am Bodenumfang detaillierter dargestellt.

Durch den nach oben zunehmenden Durchmesser der einzelnen Rohrschüsse können die einzelnen Einsätze problemlos mit einer an dem Adapter 215 angreifenden Hebezange nacheinander aus dem Kolonnenrohr entnommen werden. Auch hier wird der Ein- und Ausbau der Einsätze durch Gleitelemente 217 erleichtert, die an den die Siebböden eines Einsatzes verbindenden Längsprofilen 213 und/oder Querprofilen 214 vorgesehen sind. Bei dieser größeren Variante des erfindungsgemäßen Stripprohres ist es vorteilhaft, nicht den gesamten Kolonnenkopf zu entfernen. Vielmehr weist der Kolonnenkopf eine durch einen abnehmbaren Deckel 221 verschließbare Öffnung auf, durch welche die Einsätze entnommen werden können.

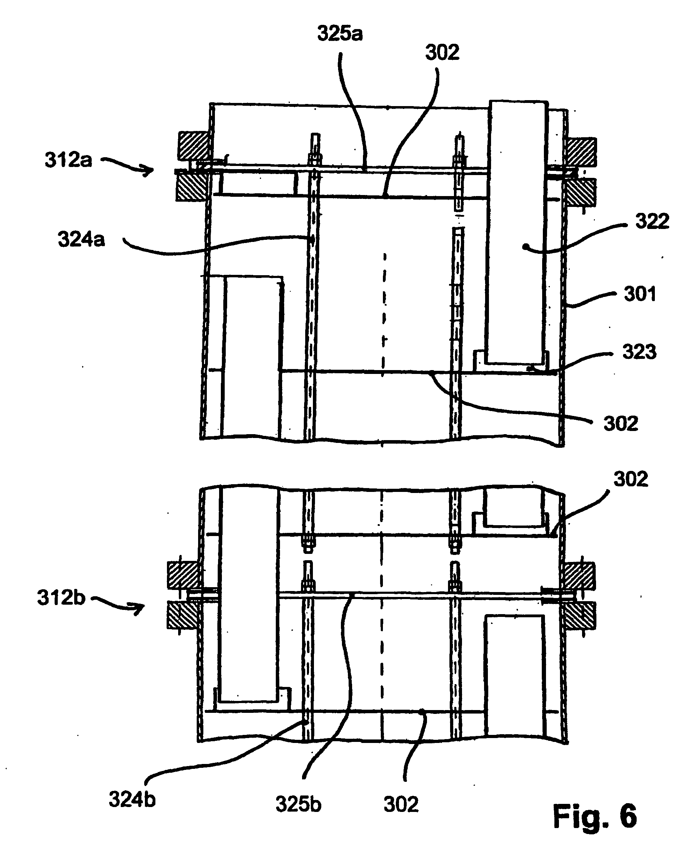

In den bisherigen Ausführungsbeispielen der Figuren 1 bis 5 waren die Siebböden als sogenannte Regensiebböden (Dual-Flow-Böden) ausgebildet. In Figur 6 ist nun eine Variante dargestellt, bei der ein erfindungsgemäßes Stripprohr mit Querstromsiebböden 302 versehen ist. Im dargestellten Ausschnitt der Stripprohrs erkennt man einen Kolonnenschuss 301 zwischen zwei Verbindungsflanschen 312a und 312b. In dem Kolonnenschuss 301 ist ein Einsatz angeordnet, der aus mehreren miteinander verbundenen Querstromsiebböden 302 besteht. Im dargestellten Beispiel sind die Siebböden 302 über an den Enden gekonterte Gewindestangen 324a miteinander verbunden. Der Einsatz wird außerdem durch umlaufende Tragringe 325a stabilisiert. Ein Überlaufschacht 322 verbindet jeweils zwei übereinanderligende Querstromsiebböden 302. Der Schacht 322 mündet in einen auf dem unteren Siebboden angeordneten Topf 323.

Figur 6 zeigt eine weitere Variante der Anordnung eines aus mehreren Siebböden bestehenden Einsatzes in dem zugeordneten Kolonnenschuss: Der Tragring 325a des Einsatzes ist in der Flanschverbindung 312a zweier Kolonnenschüsse festgeklemmt. Man erkennt, dass der obere Einsatz nicht direkt auf dem durch die Stangen 324b und den Tragring 325b zusammengehaltenen unteren Einsatz aufliegt. Diese Variante eignet sich besonders für sehr kleine Kolonnen, bei denen die Flanschverbindungen zwischen den Kolonnenschüssen rasch lösbar sind und der Einsatz aus dem Kolonnenschuss herausgehoben werden kann. Auch in diesem Fall ist eine wesentlich einfachere Reinigung als bei bekannten Strippkolonnen möglich, weil auch hier ein kompletter Einsatz mit typischerweise sechs Siebböden auf einmal aus dem Rohr entnehmbar ist.

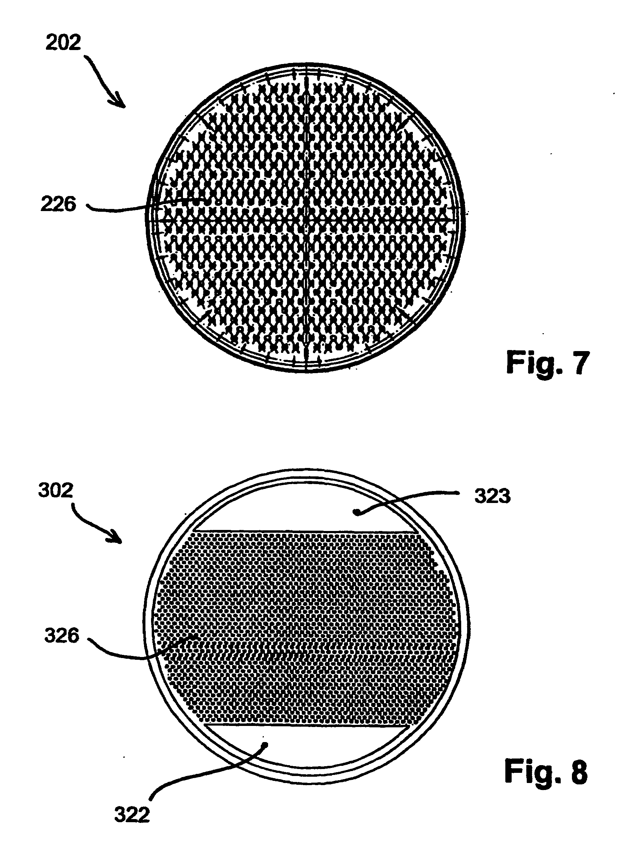

Der prinzipielle Aufbau von Regen- und Querstromsiebböden ist in den Figuren 7 und 8 dargestellt.

Figur 7 zeigt eine Aufsicht auf einen in der erfindungsgemäßen Vorrichtung verwendbaren Regensiebboden 202. Ca. 16 % der Gesamtfläche des Siebbodens wird von ca. 600 Löchern 226 mit einem mittleren Durchmesser von 10 bis 50 mm gebildet.

Zum Vergleich dazu ist in Figur 8 die Aufsicht auf einen Querstromsiebboden 326 dargestellt, der im mittleren Bereich zahlreiche Löcher 306 mit gegenüber einem Regensiebboden kleineren Durchmesser von typischerweise 2 bis 10 mm besitzt. Ein beträchtlicher Teil der Fläche des Siebbodens wird von dem den Siebboden 302 mit einem darunterliegenden Siebboden verbindenden Ablaufschacht 322 und einem Topf 323 beansprucht, in welchen der Ablaufschacht des darüberliegenden Siebbodens eintaucht, wie insbesondere aus dem Längsschnitt der Figur 6 genauer hervorgeht. Man erkennt, dass der spezifische Durchsatz eines solchen Siebbodens verglichen mit einem Regensiebboden geringer ist, da beim Querstromsiebboden wegen der von Schacht und Topf eingenommenen Flächen die vom Gas durchströmbare Fläche geringer ist. Daher werden bei der erfindungsgemäßen Vorrichtungen im Allgemeinen Regensiebböden bevorzugt eingesetzt.

Die Erfindung wird durch die nachstehenden Beispiele näher erläutert.

### Beispiel 1:

Eine Variante der Vorrichtung der Figur 1 bestand aus einem Abscheider mit einem Durchmesser von 1400 mm, an den zwei 2800 bzw. 3260 mm langen Rohrschüssen mit einem Nenndurchmesser von 500 mm angeflanscht wurden. Es wurden zwei Einsätze mit fünf bzw. sechs Querstromsiebböden, die jeweils einen Abstand von 400 mm zueinander hatten, eingebaut. Rohre mit Nenndurchmessern von 100 mm dienten als Schächte, die 100 mm nach oben aus dem jeweiligen Siebboden ragten und bis auf 50 mm an den nächst tieferen Siebboden hinunterreichten.

Diese Querstromsiebböden wurden von oben mit 2,0 t/h einer wässrigen Kosmetikdispersion (50 mPas) und von unten mit 0,4 t/h Dampf bei 54 °C (0,15 bar) im vorhandenen Abscheider beschickt. Abgereichert werden sollte rund 600 ppm t-Butanol aus der zulaufenden Dispersion. Im Dispersionsaustrag aus dem erfindungsgemäßen Gegenstrom-Stripprohr konnte mittels der üblichen GC-Analytik bei einer Nachweisgrenze von unter 10 ppm kein t-Butanol mehr nachgewiesen werden. Die Abreicherung war mithin vollständig.

### Beispiel 2

Bei einer Variante des Beispiels 1 wurden zwei Einsätze aus fünf bzw. sechs Regensiebböden, die jeweils einen Abstand von 400 mm zueinander hatten, eingebaut. Die Siebböden wiesen jeweils 103 Löcher mit 20 mm Lochdurchmesser auf, was einer freien Lochfläche von 16 % des Rohrquerschnitts entsprach. Die Regensiebböden wurden von oben mit 3,5 t/h Dispersion und von unten mit 0,7 t/h Dampf beschickt. Auch hier konnten 600 ppm t-Butanol ebenfalls auf weniger als 10 ppm abgereichert werden.

Damit steht ein Kolonnenstrippverfahren auch für sehr kleine Dispersionschargen (hier 6.000 kg) zur Verfügung, das eine ähnliche Wirksamkeit aufweist, wie die bisherigen großen Desodorierkolonnen.

### Beispiel 3

Die erfindungsgemäße Vorrichtung ist auch geeignet, um aus Polymerlösungen das Lösungsmittel abzutrennen, d.h. gegen Wasser auszutauschen.

Mit der Vorrichtung nach Beispiel 1 wurde anstelle der Dispersion ein Lösungspolymerisat in Isopropanol (3270 kg Polymer, 2080 kg Isopropanol, 460 kg Wasser) bei einem Durchsatz von 1680 kg/h zusammen mit 200 kg/h Dampf in den Abscheider eindosiert und mit 500 kg/h Dampf, die in den Kolonnensumpf eingeleitet wurden, gestrippt. Das gestrippte Lösungspolymerisat enthielt nach dem Austrag aus dem Kolonnensumpf nur noch 650 ppm Isopropanol.

### Beispiel 4

Mit der Vorrichtung nach Beispiel 2 wurde das Isopropanol aus 2.100 kg/h zulaufender Polymerlösung mit 700 kg/h Wasserdampf bis auf 300 ppm abgestrippt.

## Patentansprüche

1. Verwendung eines Gegenstrom-Stripprohrs mit
einem aus mehreren durch Flanschverbindungen miteinander verbundenen Rohrschüssen (101a-c;201a-d) zusammengesetzten Kolonnenrohr (101;201), in welchem Siebböden (102;202) angeordnet sind, wobei jeweils mehrere aufeinanderfolgende Siebböden (102;202) miteinander verbunden sind und wenigstens zwei, aus dem Kolonnenrohr (101;201) herausnehmbare Einsätze (111a-c; 211a-d) bilden,
Anschlüssen (105,108;205,208) zum Zu- und Abführen der Reaktionsprodukte und
Anschlüssen (106,107;206,207) zum Zu- und Abführen wenigstens eines Strippmittels im Gegenstrom zu den Reaktionsprodukten,
zum Entfernen von flüchtigen organischen Bestandteilen aus polymeren Reaktionsprodukten.

2. Verwendung nach Anspruch 1, wobei man Restflüchtige aus Polymerdispersionen entfernt.

3. Verwendung nach Anspruch 1, wobei man eine organisches Lösungsmittel einer Polymerlösung gegen Wasser austauscht.

4. Gegenstrom-Stripprohr mit
einem aus mehreren durch Flanschverbindungen miteinander verbundenen Rohrschüssen (201a-d) zusammengesetzten Kolonnenrohr (201), in welchem Siebböden (202) angeordnet sind, wobei jeweils mehrere aufeinanderfolgende Siebböden (202) miteinander verbunden sind und wenigstens zwei, aus dem Kolonnenrohr (201) herausnehmbare Einsätze (211a-d) bilden, wobei die Innendurchmesser aufeinanderfolgender Rohrschüsse (201a-d) von oben nach unten abnehmen und in jedem Rohrschuss (201a-d) ein herausnehmbarer Einsatz (211a-d) angeordnet ist,
Anschlüssen (205,208) zum Zu- und Abführen der Reaktionsprodukte und
Anschlüssen (206,207) zum Zu- und Abführen wenigstens eines Strippmittels im Gegenstrom zu den Reaktionsprodukten.

5. Gegenstrom-Stripprohr gemäß Anspruch 4, **dadurch gekennzeichnet, dass** die Einsätze (211a-d) auf stufenartigen Verbindungsbereichen (212a-d) zwischen jeweils zwei aufeinanderfolgenden Rohrschüssen (201a-d) aufliegen.

6. Gegenstrom-Stripprohr gemäß Anspruch 4, **dadurch gekennzeichnet, dass** die Einsätze im Kolonnenrohr aufeinanderstehen.

7. Gegenstrom-Stripprohr gemäß einem der Ansprüche 4 bis 6, **dadurch gekennzeichnet, dass** bis zu 10 Einsätze (111a-c;211a-d) in dem Kolonnenrohr (101;201) angeordnet sind.

8. Gegenstrom-Stripprohr gemäß Anspruch 7, **dadurch gekennzeichnet, dass** jeder Einsatz (111a-c;211a-d) 3 bis 10, vorzugsweise 4 bis 7 Siebböden (102;202) und besonders bevorzugt 6 Siebböden aufweist.

9. Gegenstrom-Stripprohr gemäß einem der Ansprüche 4 bis 8, **dadurch gekennzeichnet, dass** der Durchmesser der Siebböden eines Einsatzes (111a-c;211a-d) im Wesentlichen dem Innendurchmesser des Kolonnenrohrs (101;201) entspricht und bevorzugt 100 bis 2500 mm, besonders bevorzugt 500 bis 1600 mm beträgt.

10. Gegenstrom-Stripprohr gemäß Anspruch 9, **dadurch gekennzeichnet, dass** der Abstand aufeinanderfolgender Siebböden (102;202) in einem Einsatz (111a-c;211a-d) 200 bis 1000 mm, vorzugsweise 400 bis 600 mm beträgt.

11. Gegenstrom-Stripprohr gemäß einem der Ansprüche 4 bis 10, **dadurch gekennzeichnet, dass** das Stripprohr einen erweiterten Kolonnenkopf (103;203) aufweist, der abnehmbar ausgebildet ist oder der eine verschließbare Öffnung besitzt, deren Durchmesser die Entnahme der Einsätze (111a-c;211a-d) erlaubt.

## Claims

1. The use of a countercurrent stripping pipe comprising
a column pipe (101;201) composed of a plurality of pipe sections (101a-c;201a-d) connected to one another via flange connections, in which pipe sections trays (102,202) are arranged, a plurality of successive trays (102;202) being connected to one another to form at least two separate inserts (111a-c;211a-d) which can be removed from the column pipe (101;201),
connections (105,108;205,208) for supplying and removing the reaction products and
connections (106,107;206,207) for supplying and removing at least one stripping agent in countercurrent to the reaction products for removing volatile organic constituents from polymeric reaction products,.

2. The use as claimed in claim 1 for removing residual volatiles from polymer dispersions.

3. The use as claimed in claim 1 for replacing the organic solvent of a polymer solution by water.

4. A countercurrent stripping pipe comprising
a column pipe (201) composed of a plurality of pipe sections (201 a-d) connected to one another via flange connections, in which pipe sections trays (202) are arranged, a plurality of successive trays (202) being connected to one another to form at least two separate inserts (211 a-d) which can be removed from the column pipe (201 ),wherein the internal diameters of successive pipe sections (201 a-d) decrease from top to bottom and a removable insert (211a-d) is arranged in each pipe section (201 a-d),
connections (205,208) for supplying and removing the reaction products and
connections (206,207) for supplying and removing at least one stripping agent in countercurrent to the reaction products.

5. The countercurrent stripping pipe as claimed in claim 4, wherein the inserts (211a-d) lie on steplike connecting regions (212a-d) between each pair of successive tube sections (201 a-d).

6. The countercurrent stripping pipe as claimed in claim 4, wherein the inserts stand on top of one another in the column pipe.

7. The countercurrent stripping pipe as claimed in any of claims 4 to 6, wherein up to 10 inserts (111a-c;211a-d) are arranged in the column pipe (101;201).

8. The countercurrent stripping pipe as claimed in claim 7, wherein each insert (111a-c;211a-d) has from 3 to 10, preferably from 4 to 7, trays (102;202) and, with particular preference, 6 trays.

9. The countercurrent stripping pipe as claimed in any of claims 4 to 8, wherein the diameter of the trays of one insert (111a-c;211a-d) corresponds essentially to the internal diameter of the column pipe (101;201) and is preferably from 100 to 2500 mm, with particular preference from 500 to 1600 mm.

10. The countercurrent stripping pipe as claimed in claim 9, wherein the distance between successive trays (102;202) in an insert (111a-c;211a-d) is from 200 to 1000 mm, preferably from 400 to 600 mm.

11. The countercurrent stripping pipe as claimed in any of claims 4 to 10, wherein the stripping pipe has a widened column top (103;203) which is designed so as to be removable or which possesses an aperture which can be closed and whose diameter permits the removal of the inserts (111 a-c;211a-d).

## Revendications

1. Utilisation d'un tube de strippage à contre-courant avec un tube de colonne (101 ; 201), constitué de plusieurs éléments de tuyau (101a-c ; 201a-d) reliés les uns aux autres par des joints à brides, dans lesquels des fonds perforés (102 ; 202) sont disposés, où chaque fois, plusieurs fonds perforés superposés (102 ; 202) sont reliés les uns aux autres et forment au moins deux plateaux (111a-c ; 211a-d) détachables du tube de colonne (101 ; 201),
des raccords (105, 108 ; 205, 208) pour l'alimentation et l'enlèvement des produits de réaction, et
des raccords (106, 107 ; 206, 207) pour l'alimentation et l'enlèvement d'au moins un agent de strippage à contre-courant par rapport aux produits de réaction,
pour éliminer les constituants organiques volatils de produits polymères de réaction.

2. Utilisation selon la revendication 1, où l'on élimine les constituants résiduels de dispersions polymères.

3. Utilisation selon la revendication 1, où l'on échange un solvant organique d'une solution de polymère avec de l'eau.

4. Tube de strippage à contre-courant avec
un tube de colonne (201), constitué de plusieurs éléments de tuyau (201a-d) reliés les uns aux autres par des joints à brides, dans lesquels des fonds perforés (202) sont disposés, où chaque fois, plusieurs fonds perforés superposés (202) sont reliés les uns aux autres et forment au moins deux plateaux (211 a-d) détachables du tube de colonne (201), où le diamètre interne des éléments de tuyau (201a-d) superposés diminuent de haut en bas et dans chaque élément de tuyau (201 a-d), est disposé un plateau détachable (211a-d),
des raccords (205, 208) pour l'alimentation et l'enlèvement des produits de réaction, et
des raccords (206, 207) pour l'alimentation et l'enlèvement d'au moins un agent de strippage à contre-courant par rapport aux produits de réaction.

5. Tube de strippage à contre-courant selon la revendication 4, **caractérisé en ce que** les plateaux (211a-d) se trouvent en des zones de liaison de type étape (212a-d) entre chaque fois deux éléments de tuyaux (201a-d) superposés.

6. Tube de strippage à contre-courant selon la revendication 4, **caractérisé en ce que** les plateaux se trouvent l'un au-dessus de l'autre dans le tube de colonne.

7. Tube de strippage à contre-courant selon l'une des revendications 4 à 6, **caractérisé en ce que** jusqu'à 10 plateaux (111a-c ; 211a-d) sont disposés dans le tube de colonne (101 ; 201).

8. Tube de strippage à contre-courant selon la revendication 7, **caractérisé en ce que** chaque plateau (111a-c, 211a-d) présente 3 à 10, de préférence 4 à 7 fonds perforés (102 ; 202) et de manière particulièrement préférée, 6 fonds perforés.

9. Tube de strippage à contre-courant selon l'une des revendications 4 à 8, **caractérisé en ce que** le diamètre des fonds perforés d'un plateau (111a-c ; 211a-d) correspond essentiellement au diamètre interne du tube de colonne (101 ; 201) et se situe de préférence, dans l'intervalle allant de 100 à 2500 mm, de manière particulièrement préférée de 500 à 1600 mm.

10. Tube de strippage à contre-courant selon la revendication 9, **caractérisé en ce que** la distance des fonds perforés superposés (101 ; 202) dans un plateau (111a-c ; 211a-d) se situe dans l'intervalle allant de 200 à 1000 mm, de préférence de 400 à 600 mm.

11. Tube de strippage à contre-courant selon l'une des revendications 4 à 10, **caractérisé en ce que** le tube de strippage présente une tête de colonne (103 ; 203) élargie, qui est démontable ou qui possède une ouverture obturable, dont le diamètre permet le prélèvement des plateaux (111a-c ; 211a-d).
